# EUROPEAN PATENT APPLICATION

(11) **EP 2 977 865 A1**
(43) Date of publication of application: **27.01.2016**
(21) Application number: 14767854.4
(22) Date of filing: 13.03.2014
(51) Int. Cl.: G06F 3/041, G06F 3/048, G06F 3/0488

(54) **INFORMATION TERMINAL, OPERATING REGION CONTROL METHOD, AND OPERATING REGION CONTROL PROGRAM**

(30) Priority: 19.03.2013 JP 2013056608
(71) Applicant: NTT Docomo, Inc., Tokyo 100-6150 (JP)
(72) Inventor: YOSHIDA, Eriko, Tokyo 100-6150 (JP); OKAMOTO, Koji, Tokyo 100-6150 (JP); TOMITA, Kei, Tokyo 100-6150 (JP); WATANABE, Shinji, Tokyo 100-6150 (JP)
(74) Representative: Viering, Jentschura & Partner mbB Patent- und Rechtsanwälte
(86) International application number: PCT/JP2014/056710
(87) International publication number: WO 2014/148358

(57) **Abstract**

An information terminal having a touch panel includes an acquisition unit that acquires operation information related to an input operation on the touch panel, a determination unit that determines the amount of operation in a first specified operation in the operation information, and a control unit that reduces an operating region where an operation on the touch panel can be received relative to the touch panel screen in accordance with the amount of operation in the first specified operation, and the determination unit does not make determination on an operation start position of the input operation in the operation information.

## Description

### Technical Field

The present invention relates to an information terminal, an operating region control method, and an operating region control program.

### Background Art

An information terminal having a display with a touch panel function is widely used. Further, the screen size of an information terminal is increasing today in order to display more information. In such an information terminal, a technique of simply enlarging or reducing the size of an object such as a window displayed on a screen is known (for example, see Patent Literatures 1 and 2).

### Citation List

### Patent Literature

PTL 1: Japanese Unexamined Patent Application Publication No. 2009-169452
PTL 2: Japanese Unexamined Patent Application Publication No. 2005-100199

### Summary of Invention

### Technical Problem

A user of an information terminal often holds the information terminal with one hand and performs various input operations with a finger of that hand. In such an operation, there is a part of a touch screen where the finger of the hand holding the information terminal cannot reach due to an increase in screen size, which causes degradation of usability.

One aspect of the present invention has been accomplished in view of the above problem, and an object of the present invention is thus to provide an information terminal, an operating region control method, and an operating region control program that can provide good usability.

### Solution to Problem

To solve the above-described problem, an information terminal according to one aspect of the invention is an information terminal having a touch panel, which includes an acquisition means configured to acquire operation information related to an input operation on the touch panel, a determination means configured to determine that a first specified operation is performed and an amount of operation based on the operation information acquired by the acquisition means, and a control means configured to reduce an operating region where an operation on the touch panel can be received in accordance with the amount of operation in the first specified operation determined to be performed by the determination means, and the determination means does not make determination on an operation start position of the input operation in the operation information.

To solve the above-described problem, an operating region control method according to one aspect of the invention is an operating region control method in an information terminal having a touch panel that controls an operating region where an operation on the touch panel can be received, the method including an acquisition step of acquiring operation information related to an input operation on the touch panel, a determination step of determining that a first specified operation is performed and an amount of operation based on the operation information acquired in the acquisition step, and a control step of reducing an operating region where an operation on the touch panel can be received in accordance with the amount of operation in the first specified operation determined to be performed in the determination step, wherein no determination is made on an operation start position of the input operation in the operation information in the determination step.

To solve the above-described problem, an operating region control program according to one aspect of the invention causes an information terminal having a touch panel to implement an acquisition function to acquire operation information related to an input operation on the touch panel, a determination function to determine that a first specified operation is performed and an amount of operation based on the operation information acquired by the acquisition function, and a control function to reduce an operating region where an operation on the touch panel can be received in accordance with the amount of operation in the first specified operation determined to be performed by the determination function, and the determination function does not make determination on an operation start position of the input operation in the operation information.

According to the above aspects, the amount of operation in a specified operation such as a drag operation is determined based on the operation information related to an input operation, and the operating region where an operation on a touch panel can be received is reduced relative to the touch panel screen in accordance with the determined amount of operation. In this reduction control, no determination is made on the input operation start position, and therefore a user can perform this operation within a range where the finger can reach on the display. As a result that the operating region is reduced in this manner, a part of the operating region where the finger has not been able to reach can be in the range where the finger can reach. This achieves good usability.

Further, in an information terminal according to one aspect of the invention, the control means reduces a display region that is set by an application and displays a display content output from the application relative to the touch panel screen in the same manner as the operating region.

According to the above aspect, because the operating region and the display region are reduced in the same manner in GUI where the operating region and the display region are integrated, it is possible to appropriately show a user an operating position on the display and ensure good usability.

Further, in an information terminal according to one aspect of the invention, the determination means determines that the first specified operation is performed and the amount of operation when the first specified operation is performed following a second specified operation on the touch panel based on the operation information.

According to the above aspect, because the fact that the first specified operation indicating reduction of the operating region is performed and the amount of operation are determined only when it is determined that the second specified operation is performed, it is possible to distinguish between an operation for reducing the operating region and a normal input operation by the similar operation to the operation for reducing the operating region. It is thereby possible to appropriately perform the reduction of the operating region.

Further, in an information terminal according to one aspect of the invention, the control means displays a guide object for guiding the first specified operation on the touch panel when it is determined by the determination means that the second specified operation is performed.

According to the above aspect, because an object for guiding the first specified operation is displayed when the second specified operation is performed, a user can recognize how to perform an operation to reduce the operating region, thereby allowing a user to easily reduce the operating region.

Further, in an information terminal according to one aspect of the invention, the control means resizes the reduced operating region to its original size when it is determined by the determination means that a third specified operation is performed on the touch panel or when a specified event is detected by a sensor included in the information terminal.

According to the above aspect, because the state where the operating region is reduced is maintained until the third specified operation is performed or a specified event is detected, a user can continue an operation on the reduced operating region for a desired period of time. This further improves usability. Further, because the operating region is resized back to its original size when the third specified operation or the like is performed, reduction and resizing of the operating region can be made according to need.

Further, in an information terminal according to one aspect of the invention, the operating region is a region set by an application to a whole or part of a screen of the touch panel, where an input to the application is received.

According to the above aspect, because the operating region reduction control is to reduce the operating region set by the application under control of the information terminal, the application does not need to recognize the size change of the operating region on the touch panel. There is thus no need to customize the application to implement the reduction of the operating region.

### Advantageous Effects of Invention

According to one aspect of the present invention, it is possible to provide good usability in an information terminal with a touch panel.

### Brief Description of Drawings

Fig. 1 is a schematic view showing a configuration of an information terminal.
Fig. 2 is a block diagram showing a functional configuration of the information terminal.
Fig. 3 is a hardware block diagram of the information terminal.
Fig. 4 is a diagram schematically showing an operation to reduce an operating region and an example of reduction.
Fig. 5 is a diagram schematically showing an operation to resize a reduced operating region back to its original size and an example of resizing of the operating region.
Fig. 6 is a diagram showing reduction and resizing of an operating region and a display region.
Fig. 7 is a flowchart showing a process of an operating region control method.
Fig. 8 is a diagram showing a configuration of an operating region control program.

### Description of Embodiments

Embodiments of an information terminal, an operating region control method, and an operating region control program according to the present invention are described hereinafter with reference to the drawings. Note that, where possible, the same elements are denoted by the same reference numerals and redundant description thereof is omitted.

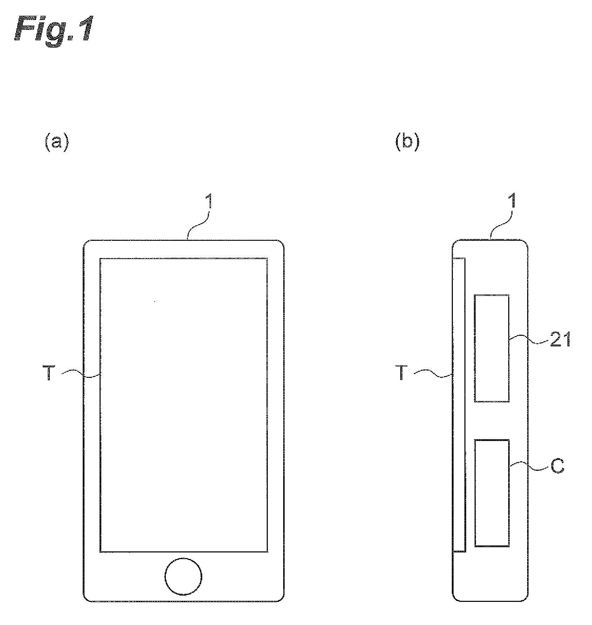

Fig. 1 is a schematic view showing a configuration of an information terminal. The information terminal 1 is a terminal device such as a smartphone, for example, having a touch panel T as shown in Fig. 1(a), and control to reduce an operating region where an operation on the touch panel T can be received is possible. Further, the information terminal 1 includes an input receiving unit 21 and a functional unit C as shown in Fig. 1(b). The input receiving unit 21 is a device such as an electrostatic sensor, for example, and can acquire coordinate information indicating a position where an input operation on the touch panel T is performed. The functional unit C is to implement various functions in the information terminal 1, and it is implemented by a device such as a CPU to which an application program is loaded.

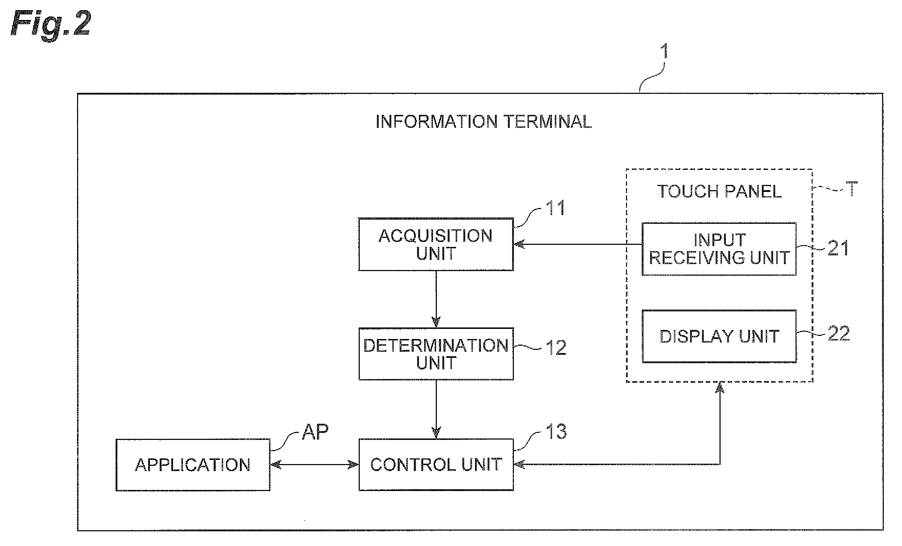

Fig. 2 is a block diagram showing a functional configuration of the information terminal 1. As shown in Fig. 2, the information terminal 1 includes an acquisition unit 11 (acquisition means), a determination unit 12 (determination means), and a control unit 13 (control means) as functional components. Further, the information terminal 1 includes an input receiving unit 21 and a display unit 22, which are implemented by the touch panel T. The input receiving unit 21 can acquire coordinate information indicating a position where an input operation on the touch panel T is performed as described above, and it can generate operation information including coordinate information. The display unit 22 is a part that displays various text, images and the like, and, in this embodiment, it displays various images and the like by control of the control unit 13, for example.

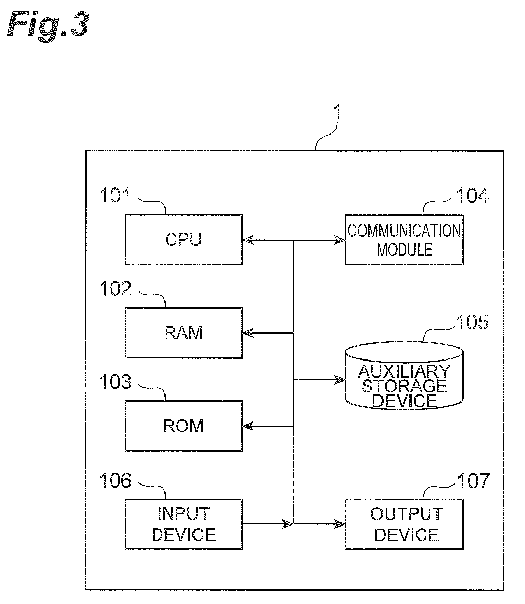

Fig. 3 is a hardware block diagram of the information terminal 1. As shown in Fig. 3, the information terminal 1 is physically configured as a computer system that includes a CPU 101, a RAM 102 and a ROM 103 which are a main storage device, a communication module 104 which is a data transmitting and receiving device, an auxiliary storage device 105 such as a hard disk or flash memory, an input device 106 such as a touch panel and a keyboard, an output device 107 such as a display and the like. The functions shown in Fig. 2 are implemented by loading given computer software onto hardware such as the CPU 101 or the RAM 102 shown in Fig. 3, making the communication module 104, the input device 106 and the output device 107 operate under control of the CPU 101, and performing reading and writing of data in the RAM 102 or the auxiliary storage device 105. The respective functional units of the information terminal 1 are described hereinafter in detail with reference back to Fig. 2.

The acquisition unit 11 is a part that acquires operation information related to an input operation on the touch panel T. Specifically, the input receiving unit 21 acquires a plurality of coordinate information of an input position in the input operation on the touch panel T by a user, and the acquisition unit 11 acquires the plurality of coordinate information of the input position acquired by the input receiving unit 21.

The determination unit 12 is a part that determines that a first specified operation is performed and the amount of operation based on the operation information acquired by the acquisition unit 11. The first specified operation is an operation for indicating reduction of the operating region, and it is preset in the information terminal 1, for example. To be specific, in the case where the first specified operation is a drag operation, when a user drags on the touch panel T, the determination unit 12 determines the moving distance of the input position related to the user's input operation as the amount of operation based on the path of the position indicated by the plurality of coordinate information contained in the operation information. In this determination, the determination unit 12 does not make determination on the start position of the input operation. Thus, the user can perform the input operation for the operating region reduction control in this embodiment within the range where the finger can reach on the touch panel T. The first specified operation is described in detail later.

The control unit 13 is a part that reduces the operating region relative to the touch panel screen in accordance with the amount of operation in the first specified operation determined by the determination unit 12. Specifically, the control unit 13 can reduce the operating region that is set to the whole or part of the touch panel screen relative to the touch panel screen in accordance with the amount of operation acquired and determined based on the first specified operation on the touch panel, for example.

The operating region is an area that is set by an application AP on the whole or part of the touch panel screen, for example, and it is an area to receive an input to the application AP. The control unit 13 performs control to display the display content output from the application AP on the display unit 22 and to make the application AP recognize information about the input operation received by the input receiving unit 21. In the information terminal 1 according to this embodiment, because the control unit 13 controls reduction of the operating region separately from the application function and control, the application AP does not need to recognize the size change such as reduction of the operating region. There is thus no need to customize the application to achieve reduction of the operating region in this embodiment.

Further, the control unit 13 reduces a display region that is set by the application AP and displays the display content output from the application relative to the touch panel screen just like the operating region. By reducing the display region in this manner, it is possible to appropriately show a user an operating position on the touch panel T in GUI composed of the operating region and the display region integrated together, thereby ensuring good usability.

Further, the determination unit 12 may determine that the first specified operation is performed and the amount of operation when the first specified operation is performed following a second specified operation on the touch panel. Specifically, when the determination unit 12 determines that the first specified operation is performed following the second specified operation on the touch panel based on the operation information, the control unit 13 reduces the operating region or the like based on the amount of operation in the first specified operation determined by the determination unit 12.

The second specified operation is a long press at a given position on the touch screen T, for example. Further, the second specified operation may be a drag operation that draws a path from the outside of the screen of the touch panel T to the inside of the screen of the touch panel T across any of the four sides of the touch panel T.

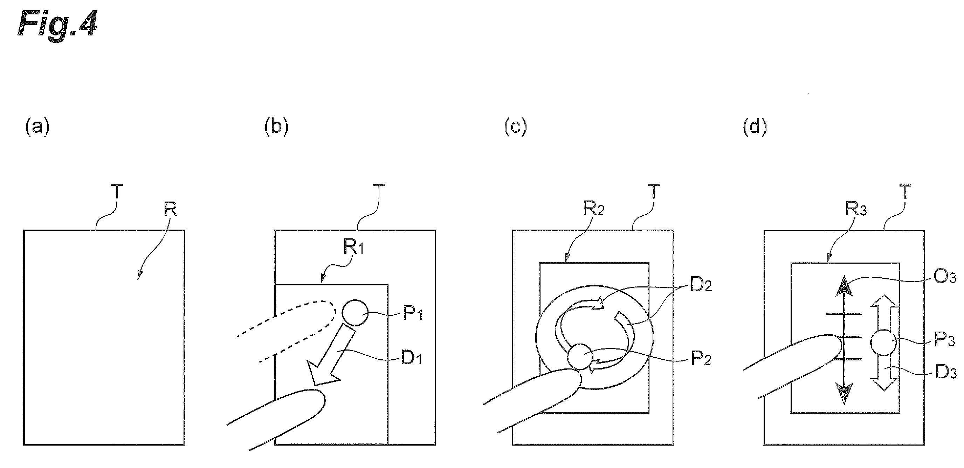

An example of operating region reduction control is specifically described with reference to Fig. 4. Fig. 4 is a diagram schematically showing an operation to reduce an operating region and an example of reduction. First, Fig. 4(a) shows the state where an operating region R is set to the whole screen of the touch panel T. When a long press operation is performed as indicated by a reference symbol P₁ and continuously a drag operation is performed as indicated by a reference symbol D₁ on the touch panel T as shown in Fig. 4(b), the acquisition unit 11 acquires operation information related to the input operation represented by the reference symbols P₁ and D₁.

Then, the determination unit 12 determines that a long press operation as the second specified operation is performed and further determines that a drag operation as the first specified operation is performed following the long press based on the operation information. At this time, the determination unit 12 determines the length of the moving path of the input position related to the drag operation as the amount of operation in the first specified operation. Then, the control unit 13 moves the operating region R based on the amount of operation in the drag operation indicated by the reference symbol D₁.

In the example shown in Fig. 4(b), because the drag operation indicated by the reference symbol D₁ is performed toward the lower left of the touch panel T on the assumption that it is preset that the screen is reduced with respect to a base point at the lower left corner of the operating region, the control unit 13 reduces the operating region R at the reduction ratio in accordance with the amount of operation of the drag operation downward on the touch panel T as indicated by the operating region R₁. Note that the correspondence between the length of the path of the drag operation and the reduction ratio is made in advance.

Further, in the case where a drag operation is performed in the opposite direction to the drag operation indicated by the reference symbol D₁, the control unit 13 may enlarge the operating region in accordance with the amount of operation.

Further, in the example shown in Fig. 4(c), when a long press operation is performed as indicated by a reference symbol P₂ and continuously a drag operation that draws a circle clockwise is performed as indicated by a reference symbol D₂, the acquisition unit 11 acquires operation information related to the input operation represented by the reference symbols P₂ and D₂.

Then, the determination unit 12 determines that a long press operation as the second specified operation is performed and further determines that a drag operation that draws a circle clockwise as the first specified operation is performed following the long press based on the operation information. At this time, the determination unit 12 determines the number of times a circle is drawn by the path of the drag operation indicated by the reference symbol D₂ as the amount of operation in the first specified operation. Then, the control unit 13 reduces the operating region R based on the amount of operation in the drag operation indicated by the reference symbol D₂.

In the example shown in Fig. 4(c), because the drag operation indicated by the reference symbol D₂ is performed toward the lower left of the touch panel T on the assumption that it is preset that the screen is reduced with respect to a base point at the center of the touch panel T, the control unit 13 reduces the operating region R at the reduction ratio according to the number of times a circle is drawn by the path of the drag operation indicated by the reference symbol D₂ as indicated by the operating region R₂. Note that the correspondence between the number of times a circle is drawn by the drag operation and the reduction ratio is made in advance.

Further, in the case where a circle is drawn by the drag operation in the opposite direction to the drag operation indicated by the reference symbol D₂, which is counterclockwise, the control unit 13 may enlarge the operating region in accordance with the amount of operation.

Further, in the example shown in Fig. 4(c), when a long press operation is performed as indicated by a reference symbol P₃ as the second specified operation, the control unit 13 displays a guide object O₃ for guiding the first specified operation on the touch panel. To be specific, as shown in Fig. 4(c), the control unit 13 displays the guide object O₃ which is a scale showing a user that the operating region is reduced when a drag operation is performed downward and that the operating region is enlarged when a drag operation is performed upward with respect to a base point at which a long press operation is performed on the touch panel T. Because the guide object O₃ is displayed, a user can recognize how to perform an operation to reduce the operating region, thereby allowing a user to easily reduce the operating region.

Note that, although the guide object O₃ and the graphics indicated by the reference symbols P₃ and D₃ are shown to be displaced in Fig. 4(c) so that the illustration of the guide object O₃ and the operation indicated by the reference symbol P₃ is clearly visible, the graphics indicated by the reference symbols P₃ and D₃ are actually placed in the positions overlapping the guide object O₃.

After a drag operation indicated by the reference symbol D₃ is performed by a user according to the guide of the guide object O₃, the determination unit 12 determines the length of the path of the drag operation indicated by the reference symbol D₃ as the amount of operation in the first specified operation. Then, the control unit 13 reduces the operating region R based on the amount of operation by the drag operation indicated by the reference symbol D₃ with respect to the base point at the center of the touch panel T as shown in the operating region R₃.

Further, in the case where a drag operation is performed in the opposite direction to the drag operation indicated by the reference symbol D₃, which is upward, the control unit 13 may enlarge the operating region in accordance with the amount of operation.

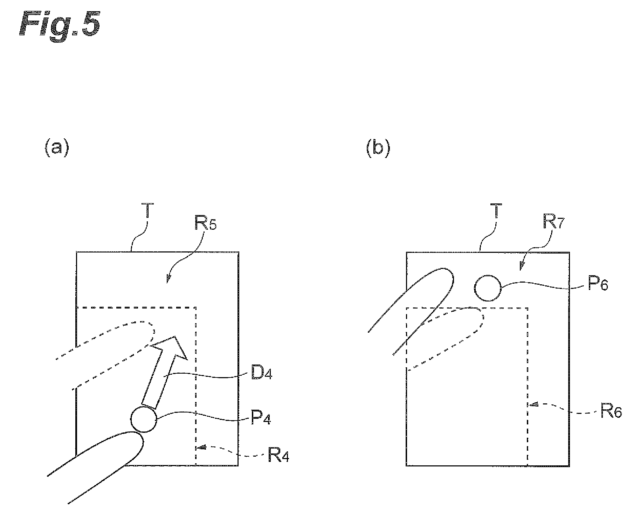

Control to resize the reduced operating region back to its original size is described hereinafter. The control unit 13 resizes the reduced operating region back to its original size when it is determined by the determination unit 12 that a third specified operation is performed on the touch panel or when a specified event is detected by a sensor included in the information terminal 1. Fig. 5 is a diagram schematically showing an operation to resize a reduced operating region back to its original size and an example of resizing.

The third specified operation is a long press at a given position in the reduced operating region on the touch panel T and a following flick operation in a given direction (for example, upward), for example. When, as shown in Fig. 5(a), it is determined by the determination unit 12 that a press operation is performed in the reduced operating region R₄ as indicated by the reference symbol P₄ and continuously a flick operation is performed as indicated by the reference symbol D₄, the control unit 13 sets the reduced operating region R₄ back to its original position as shown in the operating region R₅.

Further, the third specified operation may be a tap operation at a position outside the reduced operating region on the touch panel T. When, as shown in Fig. 5(b), it is determined by the determination unit 12 that a tap operation is performed outside the reduced operating region R₆ as indicated by the reference symbol P₆, the control unit 13 sets the reduced operating region R₆ back to its original position as shown in the operating region R₇.

Further, in the case where the information terminal. 1 includes an acceleration sensor, the control unit 13 may set the moved operating region back to its original position when the acceleration sensor detects a user's operation that shakes the information terminal 1.

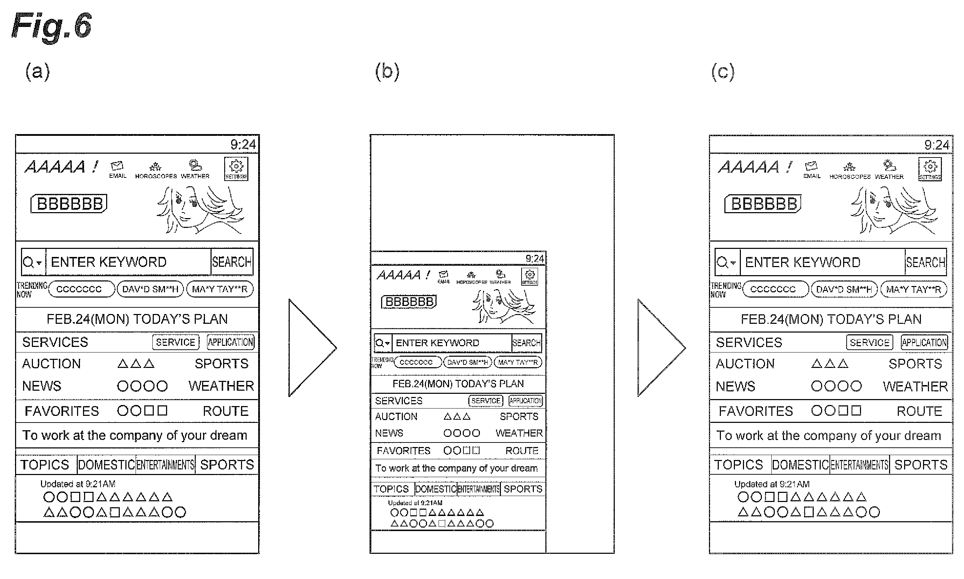

A specific example of reduction of the operating region and the display region is described hereinafter with reference to Fig. 6. Fig. 6(a) is a diagram showing a screen example of the touch panel T before the operating region or the like is reduced. In the state where a user holds the information terminal 1 with the left hand, it is difficult to touch an icon such as "settings" with a finger of the left hand, for example. Then, a user reduces the operating region and the display region by above-described operation and control as shown in Fig. 6(b), and thereby the user can touch the "settings" icon with a finger of the left hand. After that, the user performs a specified operation to resize the operating region and the display region back to their original size, and thereby the operating region and the display region display region are set back to their original size as shown in Fig. 6(c).

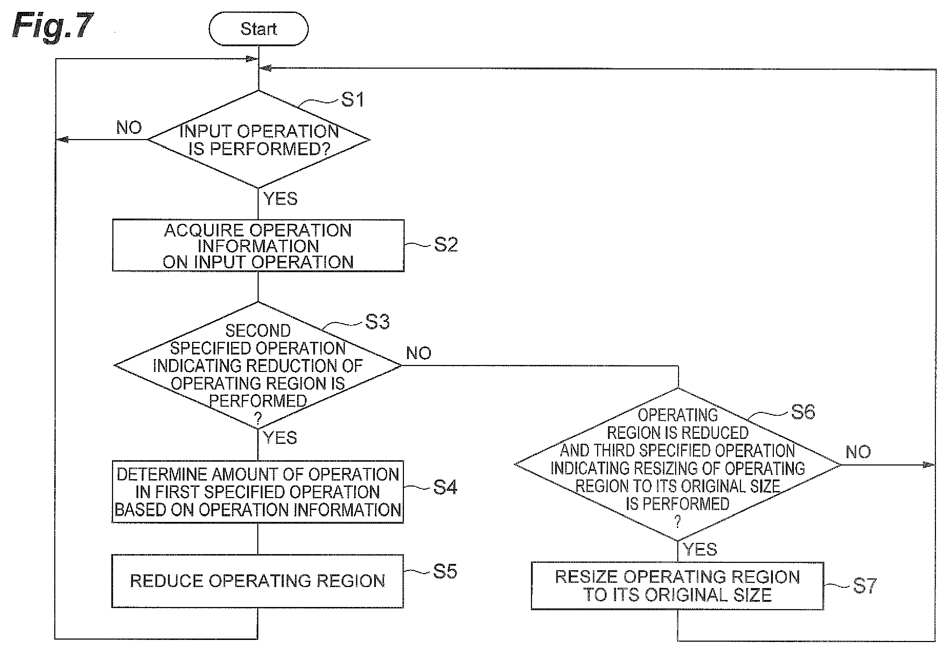

An operating region control method in the information terminal 1 is described hereinafter with reference to Fig. 7. Fig. 7 is a flowchart showing a process of the operating region control method.

First, the information terminal 1 determines whether an input operation on the touch panel T is performed by a user (S1). When it is determined that an input operation is performed, the process proceeds to Step S2. On the other hand, when it is not determined that an input operation is performed, the process returns to Step S1, and the processing of Step S1 is repeated until an input operation is detected.

In Step S2, the acquisition unit 11 acquires operation information about the input operation on the touch panel T (S2). Then, the determination unit 12 determines whether the second specified operation indicating reduction of the operating region is performed based on the operation information (S3). When it is determined that the second specified operation is performed, the process proceeds to Step S4. On the other hand, when it is not determined that the second specified operation is performed, the process proceeds to Step S6.

In Step S4, the determination unit 12 determines the amount of operation in the first specified operation that is performed following the second specified operation (S4). Then, the control unit 13 reduces the operating region based on the amount of operation in the first specified operation (S5).

In Step S6, the control unit 13 determines whether the operating region or the like is already reduced and a third specified operation indicating resizing of the operating region to its original size is performed (S6). When it is determined that the third specified operation is performed, the process proceeds to Step S7. On the other hand, when it is not determined that the third specified operation is performed, the process returns to Step S1.

In Step S7, the control unit 13 resizes the reduced operating region or the like on the touch panel T to its original size (S7).

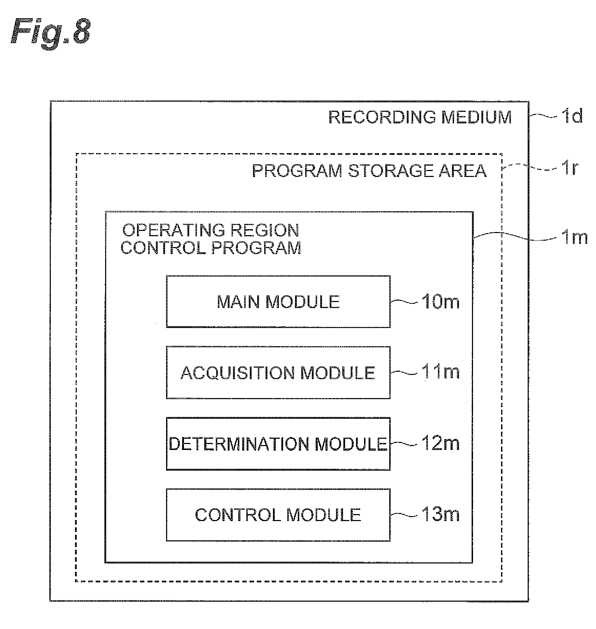

An operating region control program that causes a computer to function as the information terminal 1 according to this embodiment is described hereinbelow. Fig. 8 is a diagram showing a configuration of an operating region control program 1m.

The operating region control program 1m includes a main module 10m that exercises control over the operating region control process, an acquisition module 11m, a determination module 12m, and a control module 13m. The functions for the functional units 11 to 13 in the information terminal 1 are implemented by the modules 11m to 13m, respectively. Note that the operating region control program 1m may be transmitted through a transmission medium such as a communication line or may be stored in a program storage area 1r in a recording medium 1d as shown in Fig. 8.

In the information terminal 1, the operating region control method and the operating region control program 1m according to the embodiment described above, the amount of operation in a specified operation such as a drag operation is determined based on the operation information related to an input operation, and the operating region where an operation on a touch panel can be received is reduced relative to the touch panel screen in accordance with the determined amount of operation. In this reduction control, no determination is made on the input operation start position, and therefore a user can perform this operation within a range where the finger can reach on the display. As a result that the operating region is reduced in this manner, a part of the operating region where the finder has not been able to reach can be in the range where the finger can reach. This achieves good usability.

Hereinbefore, the present invention has been described in detail with respect to the embodiment thereof. However, the present invention is not limited to the above-described embodiment. Various changes and modifications may be made therein without departing from the scope of the invention.

### Reference Signs List

1...information terminal, 11... acquisition unit, 12...determination unit, 13...control unit, 1d...recording medium, 1m...operating region control program, 10m...main module, 11m...acquisition module, 12m....determination module, 13m... control module, 21...input receiving unit, 22...display unit, AP...application, R...operating region, T...touch panel

## Claims

1. An information terminal having a touch panel, comprising:
an acquisition means configured to acquire operation information related to an input operation on the touch panel;
a determination means configured to determine that a first specified operation is performed and an amount of operation based on the operation information acquired by the acquisition means; and
a control means configured to reduce an operating region where an operation on the touch panel can be received in accordance with the amount of operation in the first specified operation determined to be performed by the determination means, wherein
the determination means does not make determination on an operation start position of the input operation in the operation information.

2. The information terminal according to Claim 1, wherein
the control means reduces a display region that is set by an application and displays a display content output from the application in the same manner as the operating region.

3. The information terminal according to Claim 1 or 2, wherein
the determination means determines that the first specified operation is performed and the amount of operation when the first specified operation is performed following a second specified operation on the touch panel based on the operation information.

4. The information terminal according to Claim 3, wherein
the control means displays a guide object for guiding the first specified operation on the touch panel when it is determined by the determination means that the second specified operation is performed.

5. The information terminal according to any one of Claims 1 to 4, wherein
the control means resizes the reduced operating region to its original size when it is determined by the determination means that a third specified operation is performed on the touch panel or when a specified event is detected by a sensor included in the information terminal.

6. The information terminal according to any one of Claims 1 to 5, wherein
the operating region is a region set by an application to a whole or part of a screen of the touch panel, where an input to the application is received.

7. An operating region control method in an information terminal having a touch panel that controls an operating region where an operation on the touch panel can be received, comprising:
an acquisition step of acquiring operation information related to an input operation on the touch panel;
a determination step of determining that a first specified operation is performed and an amount of operation based on the operation information acquired in the acquisition step; and
a control step of reducing an operating region where an operation on the touch panel can be received in accordance with the amount of operation in the first specified operation determined to be performed in the determination step, wherein
no determination is made on an operation start position of the input operation in the operation information in the determination step.

8. An operating region control program causing an information terminal having a touch panel to implement:
an acquisition function to acquire operation information related to an input operation on the touch panel;
a determination function to determine that a first specified operation is performed and an amount of operation based on the operation information acquired by the acquisition function; and
a control function to reduce an operating region where an operation on the touch panel can be received in accordance with the amount of operation in the first specified operation determined to be performed by the determination function, wherein
the determination function does not make determination on an operation start position of the input operation in the operation information.
